# EUROPÄISCHE PATENTSCHRIFT

(11) **EP 2 924 540 B1**
(45) Veröffentlichungstag und Bekanntmachung des Hinweises auf die Patenterteilung: **24.04.2019**
(21) Anmeldenummer: 14162073.2
(22) Anmeldetag: 27.03.2014
(51) Int. Cl.: G06F 3/01, G06F 3/041

(54) **Verfahren und System zum Betreiben einer Anzeigevorrichtung**
Method and system for operating a display device
Procédé et système de fonctionnement d'un dispositif d'affichage

(43) Veröffentlichungstag der Anmeldung: 30.09.2015
(73) Patentinhaber: SensoMotoric Instruments Gesellschaft für innovative Sensorik mbH, 14513 Teltow (DE)
(72) Erfinder: Schmidt, Eberhard, 14532 Kleinmachnow (DE)
(74) Vertreter: Lang, Johannes

(56) Entgegenhaltungen:
- EP-A1- 1 997 667
- EP-A1- 2 065 795
- WO-A1-00/33731
- WO-A1-2010/118292
- WO-A1-2013/093040
- GB-A- 2 467 898
- GB-A- 2 490 868
- US-A1- 2011 134 124
- US-A1- 2011 254 865
- US-A1- 2012 256 967
- US-A1- 2012 272 179
- US-A1- 2013 257 723

## Beschreibung

Die vorliegende Erfindung betrifft ein Verfahren zum Betreiben einer Anzeigevorrichtung, welches die folgenden Schritte umfasst: Zunächst werden Bilddaten zumindest eines Teils des Kopfes eines Benutzers erfasst. Anschließend wird aus den erfassten Bilddaten mindestens ein von dem Benutzer durch Bewegung zumindest eines Teils des Kopfes veränderbarer Parameter ermittelt und anschließend eine visuelle Darstellung auf einer Anzeigevorrichtung in Abhängigkeit des ermittelten mindestens einen Parameters gesteuert. Die Erfindung betrifft weiterhin ein Rechnerprogrammprodukt mit einem Programm für eine Recheneinrichtung mit Programmcodeabschnitten zum Ausführen und/oder Veranlassen der Schritte des Verfahrens, wenn das Programm auf der Rechnereinrichtung ausgeführt wird. Schließlich umfasst die vorliegende Erfindung ein entsprechendes System zum Betreiben einer Anzeigevorrichtung mit einer Erfassungsvorrichtung zum Erfassen von Bilddaten zumindest eines Teils des Kopfes eines Benutzers, mindestens einer Recheneinrichtung, die ausgelegt ist, mindestens einen von dem Benutzer durch Bewegung zumindest eines Teils des Kopfes veränderbaren Parameter aus den von der Erfassungsvorrichtung erfassten Bilddaten zu ermitteln, sowie eine Steuervorrichtung zum Steuern einer visuellen Darstellung auf einer Anzeigevorrichtung in Abhängigkeit des von der Recheneinrichtung ermittelten mindestens einen Parameters.

In diesem Zusammenhang sind so genannte Tracking-Vorrichtungen, beispielsweise Eye-, Face- oder Headtracker, bekannt, die ausgelegt sind, Bilder zumindest eines Teils des Kopfes eines Benutzers bereitzustellen und daraus die Blickrichtung, Augenbewegungen und andere Augen- und Kopfdaten des Benutzers zu ermitteln. Derartige Tracking-Vorrichtungen können als physische Einheit vorkommen oder verteilt sein. Verteilt sind sie, wenn beispielsweise Kameras und Beleuchtungen separat vorgesehen oder in einen Monitor integriert sind, während das Programm zur Datenverarbeitung auf einem daran angeschlossenen Rechner, beispielsweise PC, Tablet PC oder Smartphone etc., abläuft. Derartige Tracking-Vorrichtungen können jedoch auch als physische Einheit ausgebildet sein, wenn eine Rechnereinheit in einer Vorrichtung, beispielsweise nach Art einer von dem Benutzer zu tragenden Brille, einen Tablet PC oder ein Laptop, integriert ist, wobei diese Vorrichtung weiterhin mindestens eine Kamera, mindestens ein Display und optional mindestens eine Beleuchtungsvorrichtung aufweist. Optional kann In diesem Fall jedoch auch vorgesehen sein, dass die von der Rechnereinheit über die mindestens eine Kamera erfassten und gegebenenfalls weiter verarbeiteten Daten an einen weiteren Rechner, beispielsweise einen PC, Tablet PC oder an ein Smartphone etc., zur Nutzung weitergegeben werden.

Aus den von der Tracking-Vorrichtung ermittelten Bilddaten wird mindestens ein von dem Benutzer durch Bewegung eines Teils des Kopfes veränderbarer Parameter ermittelt. Dieser Parameter kann beispielsweise die Blickrichtung sein, jedoch auch Augenbewegungen, Kopfbewegungen und andere Augen- und Kopfdaten. Dieser mindestens eine Parameter wird dann dazu verwendet, eine visuelle Darstellung einer Softwareanwendung auf einer Anzeigevorrichtung zu steuern, beispielsweise eine Darstellung zu scrollen, eine Zelle in einer Excel-Tabelle zur Bearbeitung auszuwählen, ein Icon anzuwählen, etc. Auf diese Weise können beispielsweise auch Behinderte, denen eine herkömmliche Bedienung von Computerprogrammen nicht möglich ist, Softwareanwendungen nutzen.

Im Rahmen der nachfolgenden Ausführungen bezeichnet der Ausdruck "Anwendung" ein Anwendungsprogramm, beispielsweise Word. Mit dem Ausdruck "Datei" wird ein Dokument bezeichnet, wie das vorliegende. Kontextparameter können an eine Datei, oder eine Anwendung oder feinere Einheiten wie Objekte, Einstellungen und dergleichen gebunden sein.

Es hat sich gezeigt, dass Benutzern die Bedienung von Softwareanwendungen durch Steuern mittels einer Tracking-Vorrichtung in unterschiedlichen Situationen schwerer oder leichter fällt, wobei die Bedienbarkeit auch von den Anforderungen der Softwareanwendung, insbesondere der jeweils angestrebten Interaktion, abhängig sein kann.

Die WO 2013/093040 A1 beschreibt ein Verfahren und System zur Darstellung mindestens eines Bildes zumindest einer Anwendung auf einer Anzeigevorrichtung. Die Art der Darstellung des Bildes wird dabei in Abhängigkeit von einem aus einer Bildaufnahme ermittelten Positionswert des Benutzers geändert. Diese Darstellungsänderung dient dabei dazu, dem Benutzer ein Feedback über seine Position relativ zu einem Sollbereich zu geben.

Die WO 2010/118292 A1 beschreibt eine Eye-Tracking-Vorrichtung mit einer Bilderfassungseinrichtung, einem Prozessor und einer Anzeigeeinrichtung zum Anzeigen einer Benutzerschnittstelle mit einem oder mehreren Interfaceelementen. Dabei detektiert die Bilderfassungseinrichtung den Blickpunkt des Benutzers relativ zur Anzeigevorrichtung. Weiterhin wird die Anzahl, Größe oder Dichte der Interfaceelemente relativ zum Blickpunkt des Benutzers erfasst und in Abhängigkeit davon ein Zoomfenster angezeigt.

Die GB 2 467 898 A beschreibt eine Anzeigeeinrichtung, bei welcher die angezeigte visuelle Darstellung in Abhängigkeit von der erfassten Position eines Benutzers vor der Anzeigeeinrichtung geändert werden kann. Unter anderem kann dabei auch die Auflösung der Darstellung variiert werden.

Die WO 00/33731 A1 beschreibt die Steuerung von Funktionen durch elektrische Signale, die mittels an der Stirn eines Benutzer angebrachten Sensoren bzw. Elektroden erfasst werden. Dadurch kann auch ein Cursor gesteuert werden, insbesondere in unterschiedlichen Geschwindigkeiten.

Die US 2011/134124 A1 beschreibt ein Verfahren zum Steuern einer Rechnereinrichtung mit einer Anzeigeeinrichtung, wobei ein Blickpunkt eines Benutzers auf der Anzeigeeinrichtung bestimmt wird, ermittelt wird, ob das Auge des Benutzers auf einen Nahbereich akkomodiert ist und in Abhängigkeit davon die Auflösung der Anzeigeeinrichtung im Bereich des Blickpunkts erhöht wird.

Die GB 2 490 88 A beschreibt eine Vorrichtung mit einer Blickrichtungserfassungseinrichtung, wobei die Auflösung einer Darstellung auf einem Display durch Zoomen in Abhängigkeit von einem erfassten Abstand des Benutzers bzw. dessen Gesicht vom Display geändert werden kann.

Die US 2013/257723 A1 offenbart die Steuerung eines Cursors auf einem Bildschirm mittels Gesten oder Kopfbewegungen, die durch eine Kamera erfasst werden können. Die Bewegungsgeschwindigkeit des Cursors kann dabei in Abhängigkeit vom Darstellungsinhalt abhängig sein oder abhängig von einem Abstand zwischen dem Gesicht des Benutzers und einem Ort, an welchem der Benutzer eine bestimmte Handlung durchgeführt hat.

Die US 2011/254865 A1 beschreibt ein mobiles Kommunikationsgerät mit Blickerfassung, wobei in Abhängigkeit des erfassten Blicks Bereiche einer Darstellung auf dem Display, auf die der Benutzer blickt, vergrößert dargestellt werden können.

Die US 2012/272179 A1 beschreibt eine Cursorsteuerung mittels Head- und Eye-Tracking, wobei ein Zielbereich, der durch den Cursor angefahren werden soll, durch eine Blickrichtung des Benutzers bestimmt wird. Weiterhin kann die Bewegungsgeschwindigkeit des Cursors in Abhängigkeit vom Abstand zu diesem Zielbereich geändert werden.

Die EP 2 065 795 A1 beschreibt die Änderung einer Zoomeigenschaft eines Displays in Abhängigkeit einer erfassten Entfernung des Benutzers vom Display.

Die Aufgabe der vorliegenden Erfindung besteht deshalb darin, ein eingangs genanntes Verfahren, ein entsprechendes Rechnerprogrammprodukt sowie ein entsprechendes System bereitzustellen, mittels dessen eine Bedienung einer visuell auf einer Anzeigevorrichtung darstellten Softwareanwendung auch in unterschiedlichen Situationen möglichst einfach und zuverlässig ermöglicht wird.

Diese Aufgabe wird gelöst durch ein Verfahren mit den Merkmalen von Patentanspruch 1, ein Rechnerprogrammprodukt mit den Merkmalen von Patentanspruch 15 sowie durch ein System mit den Merkmalen von Patentanspruch 16.

Die vorliegende Erfindung basiert auf der Kombination mehrerer Erkenntnisse: Zum einen wird die Robustheit der Steuerung visueller Darstellungen von Softwareanwendugnen auf einer Anzeigevorrichtung mittels Tracking-Vorrichtungen stark beeinflusst von den Umgebungsbedingungen, physiognomischen und kosmetischen Augen- und/oder Kopfparametern des Benutzers. Zum anderen wir die Robustheit der Steuerung durch das Verhalten des Benutzers beeinflusst. Weiterhin ist die Robustheit und auch ihre Beeinflussung durch die genannten Parameter unterschiedlich je nach den spezifischen Eigenschaften der verwendeten technischen Bauelemente, wie Kamerasensoren, Optiken, gegebenenfalls vorhandener Beleuchtung, und dergleichen. Unterschiedliche Tracking-Vorrichtungen und sogar unterschiedliche Geräte desselben Designs stellen nämlich nicht dieselbe Messgenauigkeit und Robustheit für alle Benutzer, Anwendungen und Situationen bereit. Überdies sind die Auswirkungen der genannten Unterschiede in der Robustheit je nach Anforderung der zu steuernden Softwareanwendung unterschiedlich. Je kleiner die steuerungsrelevanten Elemente auf dem Bildschirm dargestellt sind, desto größer sind die Auswirkungen der Robustheitsschwankungen auf die Bedienbarkeit und die Nutzerwahrnehmung. Schließlich ist zu berücksichtigen, dass, je mehr Benutzer solche Steuerungstechniken verwenden und je alltäglicher, d.h. unkontrollierter, die Einsatzgebiete und die Softwareanwendungen werden, eine gleichmäßige Qualität der Bedienbarkeit sowie der Benutzerwahrnehmung umso wichtiger wird.

Um unterschiedlichsten Benutzern eine effektive Benutzung derartiger Interaktionsvorrichtungen, d.h. Tracking-Vorrichtungen, mit denen Softwareanwendungen bedient werden können, zu ermöglichen, wird bei der vorliegenden Erfindung mindestens ein die Genauigkeit widerspiegelnder Qualitätsparameter ermittelt und ein "adaptiver Zoom" für die Interaktion bereitgestellt.

Wählt ein Benutzer im Rahmen der vorliegenden Erfindung beispielsweise durch Blickrichtung eine Zelle in einem Tabellenkalkulationsprogramm aus, kann erfindungsgemäß das Zellengitter dem Benutzer zu diesem Zweck mit einem Zoomlevel bereitgestellt werden, der auf die Qualität der Erfassung der Bilddaten bzw. der Genauigkeit des oben genannten ermittelten eines Parameters mit der speziell verwendeten Tracking-Vorrichtung bzw. in der bestimmten Situation, die durch Umgebungsbedingungen beeinflusst wird, bzw. für den bestimmten Benutzer abgestimmt ist. Umgekehrt besteht die Möglichkeit, eine von der Anwendung bereitgestellte Auswahlvorrichtung, beispielsweise eine Zellmarkierung in einem Tabellenkalkulationsprogramm, der normalerweise eine Zelle groß ist, so viele Zellen groß zu machen, wie sich aus der momentan erzielbaren Genauigkeit ergibt. Diese hängt ab von physischen Eigenschaften des Benutzers, den Umgebungsbedingungen, der verwendeten Hardware, von der Entfernung zwischen Benutzer und Tracking-Vorrichtung und anderen Bedingungen. Wenn demnach die Genauigkeit nur vier Zellen groß ist, dann wird immer ein Block von vier Zellen als Auswahlelement hervorgehoben angezeigt. Weiterhin kann auch in nicht diskreten Interaktionsszenarien der Cursor oder Mauszeiger der aktuellen Qualität der Erfassung der Bilddaten und/oder der Genauigkeit des oben genannten ermittelten Parameters angepasst werden und bei schlechterer Qualität oder geringerer Genauigkeit so viel größer werden, dass die Steuerung der Softwareanwendung immer entsprechend den visuellen Erwartungen erfolgt.

Die Unterschiede in der Darstellung müssen nicht groß sein, sondern können auch sehr klein sein. Entscheidend ist, dass die Anpassung dergestalt erfolgt, dass der Benutzer auch die Interaktion durchführen kann, die er aufgrund der visuellen Darstellung von Bedienelementen der Softwareanwendung erwartet.

Erfindungsgemäß wird deshalb mindestens ein Qualitätsparameter basierend auf der Erfassung der Bilddaten ermittelt und anschließend zumindest die Auflösung zumindest eines Teils der visuellen Darstellung in Abhängigkeit des mindestens einen Qualitätsparameters variiert.

Unter dem Begriff Auflösung ist im Rahmen der vorliegenden Erfindung die Größe der visuellen Darstellung gemeint. Eine Änderung der Auflösung im Sinne einer Änderung der Zahl der Pixel pro Objekt bei unveränderter Größe kann, aber muss nicht dabei vorgenommen werden.

Wird demnach eine schlechte Qualität auf der Grundlage der erfassten Bilddaten festgestellt, beispielsweise aus den erfassten Bilddaten selbst oder aus Zwischen- oder Ergebnisdaten, die aus diesen Bilddaten berechnet werden, so kann die Auflösung zumindest eines Teils der visuellen Darstellung verändert werden, um die Bedienung der Softwareanwendung mittels der Tracking-Vorrichtung durch den Benutzer weiterhin auch unter diesen schlechten Bedingungen zu ermöglichen. Auf diese Weise kann eine optimale Auflösung, beispielsweise der Zoom-Level der auf der Anzeigevorrichtung dargestellten visuellen Darstellung, bereitgestellt werden, um eine optimale "virtuelle Genauigkeit" für die Interaktion des Benutzers mit der Softwareanwendung zu ermöglichen.

Durch das erfindungsgemäße Verfahren kann demnach eine hohe Robustheit derartiger Anwendungen für unterschiedlichste Benutzer, Hardwareausstattungen und Umgebungsbedingungen sichergestellt werden. Insbesondere wird eine zuverlässige Bedienung einer derartigen Anwendung auch bei kostengünstiger Hardwareausstattung, bei hohen Genauigkeitsanforderungen der zu steuernden Softwareanwendung oder einem Benutzer mit eingeschränkten Bedienfähigkeiten ermöglicht

Bevorzugt umfasst die visuelle Darstellung zumindest ein durch Bewegung zumindest eines Teils des Kopfes bewegbares Element, wobei in Schritt e) die Auflösung einer Bewegungsgeschwindigkeit des zumindest einen bewegbaren Elements in Abhängigkeit des mindestens einen Qualitätsparameters variiert wird.

Bei schlechten Bedingungen kann es für den Benutzer bei einer gegebenen Auflösung unmöglich sein, durch Bewegung zumindest eines Teils des Kopfes ein Element auf der visuellen Darstellung zielgenau anzufahren. Wird dann die Auflösung der Bewegungsgeschwindigkeit des bewegbaren Elements reduziert, wird auf diese Weise die Bedienung der Anwendung erleichtert.

Bei einer bevorzugten Ausführungsform wird in Schritt e) die Auflösung der gesamten visuellen Darstellung in Abhängigkeit des mindestens einen Qualitätsparameters variiert. Auf diese Weise wird die Bedienung der Softwareanwendung beispielsweise von Benutzern mit eingeschränkten visuellen Fähigkeiten, beispielsweise infolge von Augenkrankheiten, Alter und dergleichen, erleichtert.

Alternativ kann in Schritt e) die Auflösung nur eines Teils der visuellen Darstellung in Abhängigkeit des mindestens einen Qualitätsparameters variiert werden. Dadurch wird der auf der Anzeigevorrichtung darstellbare Inhalt nur unwesentlich reduziert, sodass beispielsweise trotz einer Vergrößerung der Auflösung mit mehreren Fenstern gearbeitet werden kann, wenn beispielsweise nur der Inhalt des jeweils aktiven Fensters mit verbesserter Auflösung dargestellt wird.

Die visuelle Darstellung kann zumindest ein statisches und/oder ein dynamisches Element umfassen, wobei in Schritt e) die Auflösung des statischen und/oder des dynamischen Elements in Abhängigkeit des mindestens einen Qualitätsparameters variiert wird. Als Teil der visuellen Darstellung, deren Auflösung variiert wird, kann mindestens eines der Elemente aus der folgenden Gruppe in Betracht kommen: ein Bereich gemäß einer Lupenfunktion, der Inhalt eines vorgebbaren Arbeitsfensters, ein Mauszeiger, ein Cursor und/oder logische Segmente einer Anwendung, die die visuelle Darstellung erzeugt. Dies könnte beispielsweise bei Excel oder anderen Software-Anwendungen den Zellenbereich eines Arbeitsblattes, die Inhalte einer Zelle, die Symbolleisten, deren Pulldown-Menüs, Scroll-Leisten etc. betreffen.

Auf diese Weise kann beispielsweise eine Auswahlvorrichtung, also ein Mauszeiger oder ein Cursor, derart variiert, d.h. bei schlechten Bedingungen derart vergrößert werden, dass er den Genauigkeitslevel wiedergibt, mit dem der Benutzer in der aktuellen Situation visuell dargestellte Zielobjekte der auf der Anzeigevorrichtung dargestellten Anwendung auswählen kann.

Bevorzugt wird zur Ermittlung des mindestens einen Qualitätsparameters mindestens eine Größe aus der folgenden Gruppe ermittelt: Rauschanteile, Frequenz- und/oder Intensitätsverteilungen im Bild.

Mit anderen Worten können die Qualitätsparameter an jeder Stelle der Signalverarbeitungskette, vom Kamerabild bis zu den endgültig berechneten Daten, ermittelt werden.

Bei den Rauschanteilen, dem Signal-Rauschabstand oder anderen Parametern der ermittelten Objekte kommen insbesondere solche von Pupille, Limbus oder cornealem Reflex in Betracht.

Zur Ermittlung des mindestens einen Qualitätsparameters werden die in Schritt a) erfassten Bilddaten bevorzugt analysiert im Hinblick auf mindestens eine der folgenden Größen: Frequenzanteile in vorgebbaren Frequenzbereichen, insbesondere durch örtlich-zeitliche Frequenzanalyse (spatio-temporal frequency analysis) und Wavelets, Kontrastwerte in vorgebbaren Bildbereichen, insbesondere Gradienten, Kanten, Intensitäten, Häufigkeiten/Verteilungen in Bildbereichen, Größenwerte von vorgebbaren Parametern, Größenwerte von Ergebnisdaten, das Vorhandensein mindestens eines vorgebbaren Objekts und/oder eine Änderungs- oder Beschleunigungsrate von aus den in Schritt a) erfassten Bilddaten ermittelten Zwischen- oder Ergebnisdaten. Weiterhin kommen für die Analyse, insbesondere entsprechende, maschinelle/adaptive Lernverfahren in Betracht. Durch Auswertung der Frequenzanteile in vorgebbaren Frequenzbereichen können Rauschanteile bzw. Jitter als Auffälligkeiten ausgewertet werden. Bei der Auswertung der Kontrastwerte können bestimmte Bildbereiche insbesondere um bestimmte Messobjekte, beispielsweise die Pupille etc., zur Auswertung in Betracht kommen. Bei den Größenwerten von vorgebbaren Parametern kommen insbesondere Größenwerte der Messobjekte in Betracht. Wird beispielsweise ein kleiner cornealer Reflex ermittelt, ist eher von einer niedrigen Messqualität auszugehen. Bei den Größenwerten von Ergebnisdaten kommt beispielsweise der Blickwinkel in Betracht: So ist ein kleiner Blickwinkel eher ein Indiz für eine hohe Messqualität, während ein großer Blickwinkel eher ein Indiz für eine geringe Messqualität darstellt. Wird das Vorhandensein vorgebbarer Objekte geprüft, ist beispielsweise zu berücksichtigen, ob das Vorhandensein eines oder zweier Augen ermittelt wird. Werden beispielsweise alle gesuchten kornealen Reflexe für beide Augen gefunden, so ist dies ein Indiz für eine höhere Messqualität, als wenn korneale Reflexe bei einem oder beiden Augen nicht gefunden wurden. Unterscheiden sich weiterhin beispielsweise die Blickwinkel zweiter Augen um mehr als einen vorgebbaren Schwellwert, so kann dies ein Indiz für eine geringe Messqualität sein. Eine hohe Änderungs- oder Beschleunigungsrate beispielsweise der Kopfpositionsdaten spricht eher für eine niedrige Messqualität, während umgekehrt niedrige Änderungs- und Beschleunigungsraten für eine hohe Messqualität sprechen.

Die Auflösung kann gemäß einer linearen, einer nicht-linearen, einer stetigen und/oder einer nicht-stetigen Kennlinie variiert werden. Auf diese Weise kann beispielsweise eine Anpassung an die Leistungsfähigkeit der entsprechenden Recheneinheit vorgenommen oder den spezifischen Anforderungen einer bestimmten Anwendung Rechnung getragen werden. Beispielsweise funktionieren implizite oder auch manchmal passiv genannte Anwendungsfälle, in denen zum Beispiel der Blickpunkt auf die Darstellung verwendet, aber nicht gezeigt wird, wie dies beispielsweise bei einigen Spielen der Fall ist, besser mit einer stetigen Kennlinie. Explizite Anwendungsfälle, also solche, bei denen der Blickpunkt sichtbar gemacht wird und ein Benutzer zum Beispiel einen Cursor oder eine andere Auswahlmarkierung sichtbar bewegt, wie beispielsweise ein Tabellenkalkulationsprogramm oder Eingabemasken, funktionieren besser mit diskreten Vergrößerungen. Analoges funktioniert für die Interaktion durch Kopfbewegung mit einer Anwendung. Eine nicht-lineare Kennlinie ist besonders in solchen Anwendungsfällen sinnvoll, in denen die Größenunterschiede der Interaktionselemente der Darstellung erheblich sind und bei geringerer Messqualität schnelle eine stärkere Vergrößerung gewählt werden muss, um eine flüssige Interaktion zu gewährleisten.

Es kann vorgesehen sein, dass die Variation der Auflösung durch einen Benutzer ein- und ausgeschaltet werden kann, insbesondere durch einen Tastenbefehl, einen Sprachbefehl oder einen Gestenbefehl. Wird beispielsweise die Auflösung der gesamten visuellen Darstellung vergrößert, kann dies dazu führen, dass die Arbeit mit einem in einem Arbeitsfenster ablaufenden Tabellenkalkulationsprogramm erleichtert wird. Jedoch könnten nach oder während der Bearbeitung andere Arbeitsfenster schlecht zu erkennen sein. Durch die Möglichkeit, die Variation der Auflösung ein- und auszuschalten, können dann auf einfache Weise wieder alle Arbeitsfenster auf der Anzeigevorrichtung erkennbar sein, um beispielsweise einem Benutzer einen Wechsel der Softwareanwendung zu ermöglichen. Außerdem kann es sinnvoll sein, eine oder mehrere global für den Nutzer oder spezifisch für bestimmte Anwendungsfälle geeignete Auflösungen abzuspeichern und wieder abzurufen. Besonders nützlich kann es sein, derartige spezifische Auflösungen an den Anwendungsfall zu binden und im Falle seines Eintretens automatisch einzustellen, so dass ein Gewöhnungseffekt beim Nutzer eintreten kann und die Auflösung nicht mehr als nötig variiert wird.

Bevorzugt wird der mindestens eine Qualitätsparameter ermittelt nach Schritt a), insbesondere mit Schritt b) oder zwischen Schritt b) und Schritt c), oder alternativ fortlaufend, d.h. zunächst nach Schritt a) und weiterhin in vorgebbaren zeitlichen Abständen und/oder in Abhängigkeit mindestens eines vorgebbaren Ereignisses, bevorzugt bei Über- und/oder Unterschreiten mindestens eines vorgebbaren Schwellwerts für Bild-, Zwischen- oder Ergebnisdaten, insbesondere mindestens eines aus diesen Daten abgeleiteten Qualitätsparameters. Als besonders bevorzugte Zeitpunkte zur Ermittlung des mindestens einen Qualitätsparameters ist der Zeitpunkt der Initialisierung des Systems, inklusive der Kalibrierung und der Validierung, oder der Wechsel von Anwendungen, Dateien, Ansichten oder Prozessschritten, die neue Größen der Bedienelemente zur Folge haben können, zu nennen.

Die zur Variation der Auflösung nötigen Berechnungen können in der Trackingvorrichtung, beispielsweise in einem Eyetracker, oder mit einem separaten Programm auf dem Zielrechner oder als Teil des Betriebssystems oder als Teil einer Anwendung vorgenommen werden.

Als der mindestens eine Teil der Kopfes des Benutzers wird/werden bevorzugt dessen Kopf selbst und/oder ein und/oder zwei Augen des Benutzers bewegt.

Weitere bevorzugte Ausführungsformen ergeben sich aus den Unteransprüchen.

Die mit Bezug auf das erfindungsgemäße Verfahren vorgestellten bevorzugten Ausführungsformen und deren Vorteile gelten entsprechend, soweit anwendbar, für das erfindungsgemäße Rechnerprogrammprodukt und das erfindungsgemäße System zum Betreiben einer Anzeigevorrichtung.

Nachfolgend werden nunmehr Ausführungsbeispiele der vorliegenden Erfindung unter Bezugnahme auf die beigefügten Zeichnungen näher beschrieben. Es zeigen:
- Fig. 1: in schematischer Darstellung den Aufbau einer ersten Ausführungsform eines erfindungsgemäßen Systems;
- Fig. 2: in schematischer Darstellung den Aufbau einer zweiten, einer dritten und einer vierten Ausführungsform eines erfindungsgemäßen Systems;
- Fig. 3: ein erstes Anwendungsbeispiel der vorliegenden Erfindung;
- Fig. 4: ein zweites Anwendungsbeispiel der vorliegenden Erfindung;
- Fig. 5: ein drittes Anwendungsbeispiel der vorliegenden Erfindung;
- Fig. 6: in schematischer Darstellung einen Signalflussgraphen einer ersten Ausführungsform des erfindungsgemäßen Verfahrens; und
- Fig. 7: in schematischer Darstellung einen Signalflussgraphen einer zweiten Ausführungsform des erfindungsgemäßen Verfahrens.

In den unterschiedlichen Figuren werden im Nachfolgenden der Übersichtlichkeit halber für gleiche und gleichwirkende Elemente dieselben Bezugszeichen verwendet.

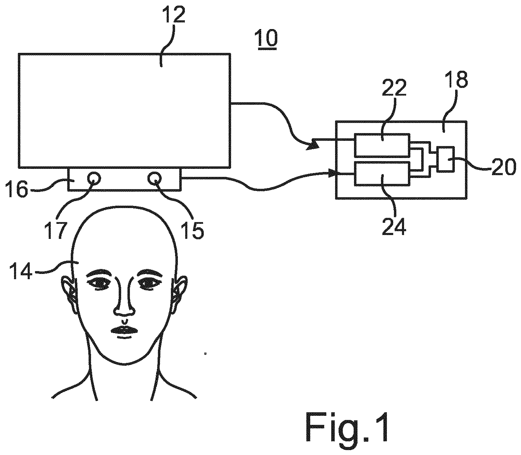

Fig. 1 zeigt in schematischer Darstellung den Aufbau eines erfindungsgemäßen Systems 10, wie er insbesondere bei einer stationären Situation Anwendung finden kann. Dabei ist ein Monitor 12 vor einem Benutzer 14 positioniert, wobei an der Unterseite des Monitors 12 ein Eyetracker 16 angeordnet ist, der eine Beleuchtungsvorrichtung 17 und eine Kameravorrichtung 15 zum Erfassen von Bilddaten mindestens eines Teils des Kopfes des Benutzers 14 umfasst. Mit dem Monitor 12 und dem Eyetracker 16 ist eine Datenverarbeitungseinrichtung 18 gekoppelt, in der eine Softwareanwendung 20 abgelegt ist, die eine visuelle Darstellung auf dem Monitor 12 erzeugt. Mittels einer Steuervorrichtung 22, die mit einer Recheneinrichtung 24 der Datenverarbeitungsvorrichtung gekoppelt ist, lässt sich die visuelle Darstellung der Anwendung auf dem Monitor 12 steuern. Die Recheneinrichtung 24 ist ausgebildet, auf der Basis der vom Eyetracker 16 erfassten Bilddaten zumindest eines Teils des Kopfes eines Benutzers, insbesondere dessen Kopf selbst oder ein oder zwei Augen, mindestens einen Qualitätsparameter zu ermitteln. Die Steuervorrichtung 22 ist ausgelegt, die Auflösung zumindest eines Teils der visuellen Darstellung auf dem Monitor 12 in Abhängigkeit des mindestens einen von der Recheneinheit 24 ermittelten Qualitätsparameters zu variieren. In einem nicht gezeigten Ausführungsbeispiel können auch mehrere Beleuchtungsvorrichtungen 17 und/oder mehrere Kameravorrichtungen 15 vorgesehen sein. Weiter alternativ kann die oben genannte Ermittlung des Qualitätsparameters auch auf einer Recheneinrichtung stattfinden, die im Eyetracker untergebracht ist, wobei dann nur die Messdaten und der ermittelte Qualitätsparameter an die Datenverarbeitungseinrichtung 18 weitergegeben werden.

Zur Ermittlung des mindestens einen Qualitätsparameters kann die Recheneinheit 24 Parameter in den erfassten Bilddaten auswerten, insbesondere Rauschanteile im Bild und/oder Rauschanteile der ermittelten Objekte. Sie kann auch Parameter bei der Auswertung der erfassten Bilddaten auswerten, insbesondere bei den aus den erfassten Bilddaten berechneten Zwischen- oder Ergebnisdaten. Dazu kann die Recheneinheit 24 ausgelegt sein, die erfassten Bilddaten zu analysieren im Hinblick auf Frequenzanteile in vorgebbaren Frequenzbereichen, Kontrastwerte in vorgebbaren Bildbereichen, das Vorhandensein vorgebbarer Objekte und/oder eine Änderungs- oder Beschleunigungsrate von aus den erfassten Bilddaten ermittelten Zwischen- oder Ergebnisdaten.

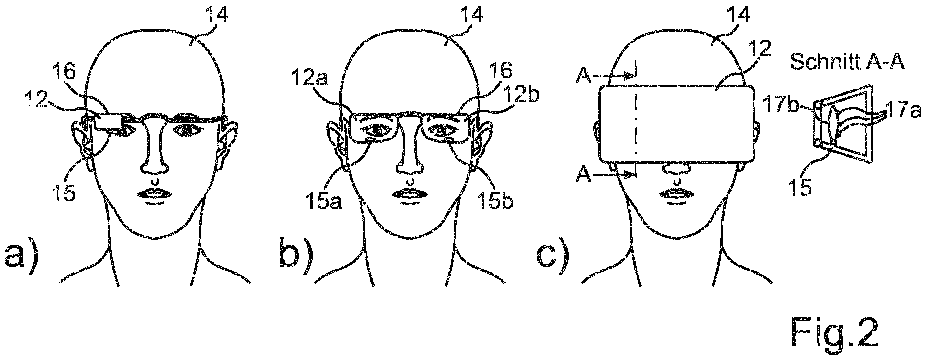

Fig. 2 zeigt schematisch Komponenten eines Ausführungsbeispiels eines erfindungsgemäßen Systems, wie sie bevorzugt bei einer mobilen Situation zur Anwendung kommen können. Dabei wird ein Eyetracker 16 benutzt, der nach Art einer Brille von einem Benutzer 14 getragen werden kann und neben mindestens einer Kamera 15 zur Erfassung von Bilddaten mindestens eines Auges des Benutzers 14 weiterhin über mindestens eine Anzeigeeinheit 12, beispielsweise ein Display, verfügt, die mit dem tragbaren Eyetracker 16 derart gekoppelt ist, dass ein Bild in mindestens ein Auge des Benutzers 14 projizierbar ist. Während Fig. 2a eine monokulare Ausführungsform zeigt, ist in Fig. 2b eine binokulare Ausführungsform dargestellt. Die monokulare Ausführungsform kann mit nur einer Kamera 15 und einer Anzeigevorrichtung 12 ausgebildet sein, während die binokulare Ausführungsform mit zwei Anzeigevorrichtungen 12a, 12b und zwei Kameras 15a, 15b realisiert ist.

In der in Fig. 2c dargestellten Ausführungsform ist wie in einem geschlossenen kopfgetragenen Display (HMD) die Anzeigevorrichtung 12 undurchsichtig ausgebildet und in einer mehr oder weniger geschlossenen Maske angeordnet, die überdies die mindestens eine Kamera 15 sowie LEDs 17a und eine den LEDs 17a zugeordnete Optik 17b umfasst des Eyetrackers 16 entweder in monokularer oder binokularer Form enthält. In einer derartigen Ausführungsform liefert die Anzeigevorrichtung 12 die Bilder für beide Augen des Benutzers 14.

Die Datenverarbeitungseinrichtung 18 von Fig. 1 kann bei den Ausführungsformen von Fig. 2 sowie der erwähnten Alternative in dem jeweiligen Eyetracker 16 vorgesehen sein. Es ist jedoch auch möglich, die Eyetracker 16 dieser über Kabel oder Funk mit einer mobilden oder stationären Datenverarbeitungseinrichtung 18 zu koppeln. Im Falle einer mobilen Ausführung der Datenverarbeitungsvorrichtung 18 kann diese bevorzugt als Smartphone oder Tablet PC ausgebildet sein.

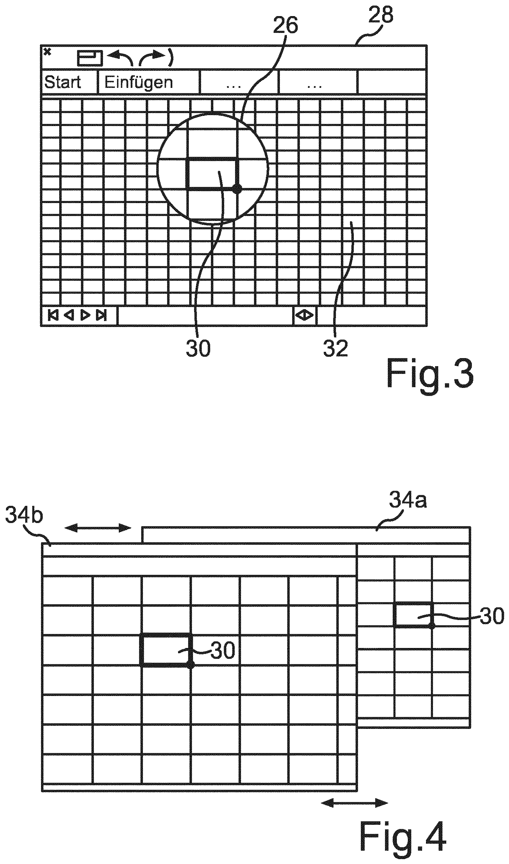

Fig. 3 zeigt in schematischer Darstellung ein Beispiel für eine Anwendung der vorliegenden Erfindung bei einem Tabellenkalkulationsprogramm, beispielsweise Excel. In Abhängigkeit des ermittelten Qualitätsparameters wird die Auflösung in einem Bereich 26 gemäß einer Lupenfunktion vergrößert. Der Bereich 26 kann in Abhängigkeit einer aus den erfassten Bilddaten ermittelten Blickrichtung des Benutzers über die gesamte visuelle Darstellung 28 bewegt werden. Wie deutlich zu erkennen ist, sind die Abmessungen einer Zelle 30 innerhalb des Bereichs 26 deutlich größer als bei einer Zelle 32 außerhalb des Bereichs 26. Wie weiterhin zu erkennen ist, hat der Benutzer 14 durch eine vorgebbare Maßnahme die Zelle 30 zur Bearbeitung aktiviert. Die Bearbeitung kann erfindungsgemäß bei einer größeren, dem Status des ermittelten Qualitätsparameters und gegebenenfalls der Kontextinformation entsprechenden Auflösung erfolgen, als sie für die Darstellung außerhalb des Bereichs 26 verwendet wird. Es kann vorgesehen sein, dass der Benutzer eine einmal ermittelte Vergrößerungseinstellung speichern und wiederverwenden kann. Weiterhin kann vorgesehen sein, dass die Auflösung bei Feststellen einer Änderung des Qualitätsparameters variiert werden kann. Damit wird eine jederzeit optimale Darstellung für eine effiziente Bedienung erreicht.

Auf der einen Seite ermöglicht es diese Funktion dem Benutzer 14, den Überblick zu bewahren, andererseits ermöglicht sie eine Bearbeitung unter guten optischen Bedingungen. Die Maßnahme zur Aktivierung der Zelle 30 innerhalb des Bereichs 26 kann beispielsweise darin bestehen, dass der Benutzer 14 seinen Blick auf diese Zelle richtet, gegebenenfalls gleichzeitig eine Taste drückt, eine Geste ausführt oder ein akustisches Signal von sich gibt. Es kann auch vorgesehen sein, dass die Aktivierung der Zelle 30 dadurch erfolgt, dass der Benutzer 14 seinen Blick auf diese Zelle 30 richtet und innerhalb eines vorgebbaren Zeitfensters mit einem oder zwei Augen zwinkert oder die Zelle für eine vorgebbare Mindestzeit fixiert. Andere Möglichkeiten sind für den Fachmann denkbar, jedoch nicht Gegenstand der vorliegenden Erfindung.

Fig. 4 zeigt ein weiteres Anwendungsbeispiel der vorliegenden Erfindung. Hier wird in Abhängigkeit des mindestens einen Qualitätsparameters die Auflösung eines Arbeitsfelds, d.h. beispielsweise eines Arbeitsfensters, variiert. Liegen gute Verhältnisse vor, d.h. beispielsweise eine hochwertige Tracking-Vorrichtung, eine gute Beleuchtung, ein geringer Abstand zwischen Tracking-Vorrichtung und Benutzer etc., kann das Arbeitsfenster mit niedriger Auflösung auf der Anzeigevorrichtung 12 dargestellt werden, beispielsweise wie das Arbeitsfenster 34a. Lässt jedoch der Qualitätsparameter auf schlechte Bedingungen schließen, wird das Arbeitsfenster mit einer verbesserten Auflösung dargestellt, siehe Arbeitsfenster 34b.

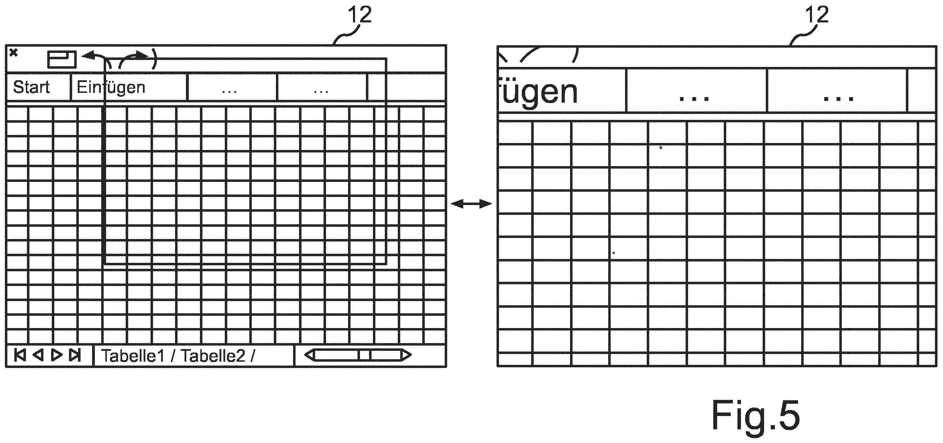

Fig. 5 zeigt eine weitere Anwendung der vorliegenden Erfindung. Links ist die visuelle Darstellung auf dem Monitor 12 bei guten Verhältnissen gezeigt, während rechts die visuelle Darstellung derselben Anwendung bei schlechten Verhältnissen gezeigt ist. Wie deutlich zu erkennen ist, ist die Auflösung der gesamten Darstellung vergrößert worden.

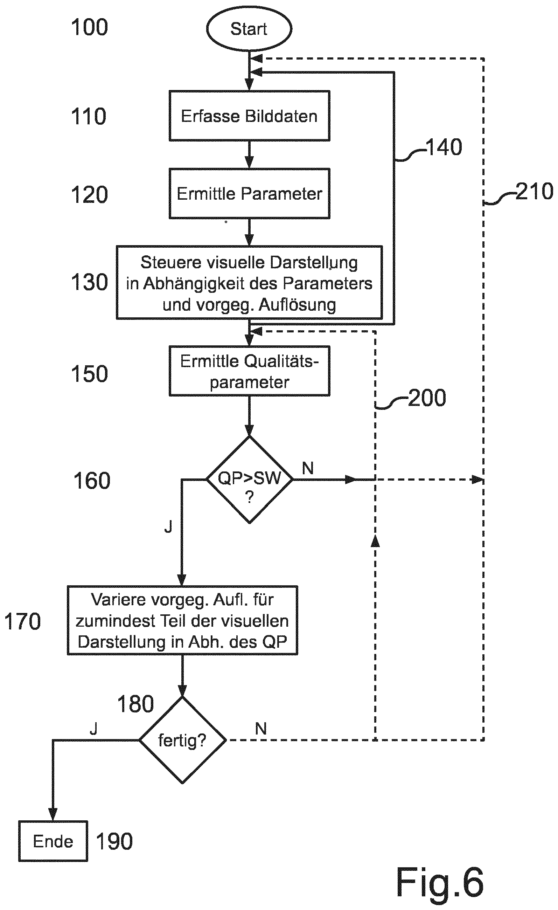

Fig. 6 zeigt ein Ausführungsbeispiel eines erfindungsgemäßen Verfahrens. Das Verfahren startet in Schritt 100. In Schritt 110 werden Bilddaten zumindest eines Teils des Kopfes eines Benutzers erfasst. Anschließend wird in Schritt 120 mindestens ein von dem Benutzer durch Bewegung zumindest eines Teils des Kopfes veränderbarer Parameter aus den in Schritt 110 erfassten Bilddaten ermittelt. Anschließend wird in Schritt 130 eine visuelle Darstellung auf einer Anzeigevorrichtung in Abhängigkeit des ermittelten mindestens einen Parameters und einer vorgegebenen Auflösung gesteuert.

Beispielsweise wird in Schritt 120 die Blickrichtung ermittelt und dadurch eine Zelle 30 aktiviert, siehe hierzu beispielsweise Fig. 3 und 4. In jedem Fall läuft dann die Messschleife, wie durch den Schritt 140 symbolisiert, fortlaufend weiter, um den Parameter aus den Bilddaten zu ermitteln, zumindest solange die so gestaltete Interaktion aktiv ist.

Überdies wird vorliegend in Schritt 150 mindestens ein Qualitätsparameter auf der Basis der in Schritt 110 erfassten Bilddaten ermittelt. Dabei können die unmittelbar erfassten Bilddaten ausgewertet werden oder auch daraus berechnete Zwischen- oder Ergebnisdaten. Insbesondere werden dabei Rauschanteile im Bild und/oder Rauschanteile der ermittelten Objekte näher untersucht oder beispielsweise Rauschanteile der ermittelten Blickrichtung.

In Schritt 160 wird geprüft, ob der Wert des Qualitätsparameters über einem vorgebbaren Schwellwert liegt. Ist dies der Fall, so wird dann in Schritt 170 die vorgegebene Auflösung für zumindest einen Teil der visuellen Darstellung auf der Anzeigevorrichtung in Abhängigkeit dieses Werts variiert. Wird jedoch in Schritt 160 ein Unterschreiten des Schwellwerts festgestellt, wird das Verfahren entweder im Schritt 200 oder im Schritt 210 fortgesetzt (je nach Implementierung).

Die Schritte 150 bis 170 können einmalig ausgeführt werden, beispielsweise bei der Initialisierung eines erfindungsgemäßen Systems, insbesondere inklusive der Kalibrierung und der Validierung. In diesem Fall wird gegebenenfalls unter Umgehung des Schritts 160 im Schritt 180 in den mit "J" gekennzeichneten Zweig verzweigt, wonach das Verfahren im Schritt 190 beendet wird (Die Meßschleife umfassend die Schritte 110, 120, 130 und 140 läuft selbstverständlich weiter).

Soll die Auswertung fortlaufend durchgeführt werden, zweigt das Verfahren im Schritt 180 je nach Vereinbarung über den Schritt 200 oder den Schritt 210 zurück. Bei Rückverzweigung gemäß Schritt 200 oder Schritt 210 können die Schritte 150 bis 180 fortlaufend regelmäßig (wie vorliegend dargestellt) oder auch ereignis- bzw. schwellwertgetriggert vorgenommen werden.

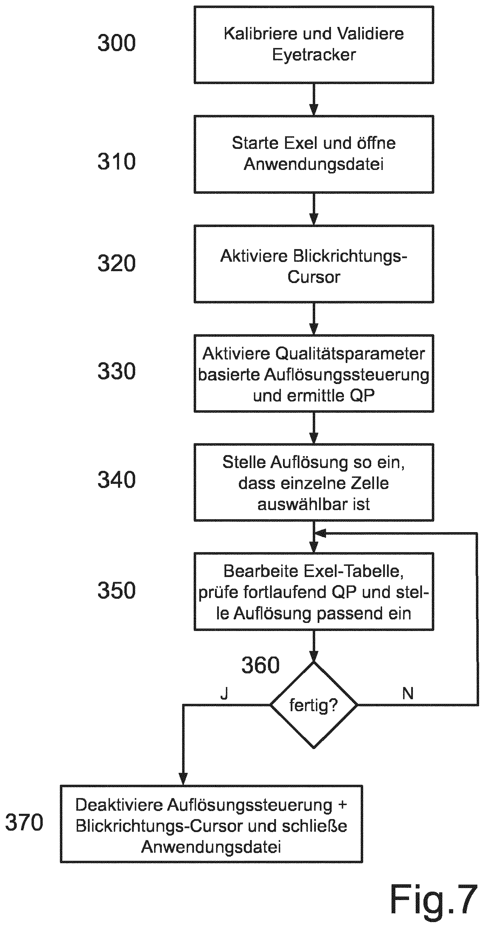

Fig. 7 zeigt ein Ausführungsbeispiel des erfindungsgemäßen Verfahrens am Beispiel des Tabellenkalkulationsprogramms Excel und der Verwendung eines Eyetrackers als Tracking-Vorrichtung. Dabei wird zunächst in Schritt 300 der Eyetracker kalibriert und validiert. Zu diesem Zweck misst der Eyetracker beispielsweise, wohin der Benutzer 14 auf dem Monitor 12 blickt (gaze point), und validiert die Genauigkeit in Abhängigkeit der Monitorkoordinaten. In Schritt 310 wird Excel gestartet und eine Anwendungsdatei geöffnet. Anschließend wird in Schritt 320 ein Blickrichtungscursor aktiviert, d.h. ein Cursor, der von dem Benutzer durch Variation seiner Blickrichtung über den Monitor bewegt werden kann. Die Aktivierung erfolgt beispielsweise über eine vorgebbare Taste auf der Tastatur.

Anschließend, d.h. in Schritt 330, oder gleichzeitig mit Schritt 320 wird die qualitätsparameterbasierte Auflösungssteuerung gemäß der vorliegenden Erfindung aktiviert. Wenn dies nicht gleichzeitig in Schritt 320 erfolgt, kann es ebenfalls durch Drücken einer vorgebbaren Tastenkombination oder durch ein akustisches oder visuelles Signal in Schritt 330 erfolgen.

In Schritt 340 wird die Auflösung so eingestellt, dass in Abhängigkeit des ermittelten Qualitätsparameters im Anwendungsbeispiel mittels der Blickrichtung eine einzelne Zelle einer Excel-Tabelle ausgewählt werden kann. Die einzelne Zelle, auf die der Benutzer 14 seinen Blick richtet, wird hervorgehoben dargestellt. Alternativ könnte die Gruppe von Zellen, die der aktuellen Auflösung der Darstellung und dem Qualitätsparameter des Eyetrackers entspricht, hervorgehoben werden. Der Benutzer sieht dann, dass die Auflösung nicht ausreicht, um eine einzelne Zelle visuell zu selektieren. Aktiviert er die erfindungsgemäße Auflösungsanpassung, so wird die Auflösung so angepasst, dass er eine Zelle sicher visuell selektieren kann.

In Schritt 350 wird die jeweilige, durch Blickrichtung ausgewählte Zelle bearbeitet. Dies beinhaltet die Auswahl einer Zelle mittels der Blickrichtung, die Aktivierung des Zelleneditiermodus, indem begonnen wird, auf die Tastatur zu drücken oder zu sprechen. Anschließend wird beispielsweise eine Formel in einen Zellbereich als Argument eingegeben, um eine erste Zelle eines Zellbereichs zu adressieren. Daraufhin wird auf eine relevante Zelle geblickt und eine Taste gedrückt, um diese auszuwählen. Anschließend wird auf die letzte Zelle des relevanten Zellbereichs geblickt und die Tastatur losgelassen, um die Auswahl zu komplettieren. Anschließend wird beispielsweise die ")"-Taste gedrückt, um die Formeleingabe zu beenden. Wenn innerhalb dieses Vorgangs beispielsweise die letzte relevante Zelle des Bereichs in einem Bereich ist, der mit geringerer Genauigkeit validiert wurde als die Startzelle des relevanten Bereichs, dann wird der Zoom automatisch variiert, um eine Einzelzellauswahl in diesem Bereich zu ermöglichen. Dasselbe würde erfindungsgemäß passieren, wenn sich beispielsweise aufgrund einer geänderten Entfernung zwischen Benutzer und Eyetracker die Rauschanteile bei der Blickrichtungsmessung ändern. Alternativ könnte die Einstellung der erfindungsgemäßen Autoskalierung dergestalt sein, dass gleich, d.h. automatisch, der gesamte sichtbare Zellenbereich so in der Auflösung angepasst wird, dass der Benutzer bei den gegebenen Bedingungen immer eine Zelle sicher visuell selektieren kann.

Während der Bearbeitung der Excel-Tabelle In Schritt 350 wird demnach fortlaufend der mindestens eine Qualitätsparameter geprüft wird und die Auflösung passend eingestellt, insbesondere so, dass auch bei einer Verschlechterung des Qualitätsparameters eine einzelne Zelle einer Excel-Tabelle anwählbar bleibt.

In Schritt 360 wird geprüft, ob die Bearbeitung der Excel-Tabelle abgeschlossen ist; falls nein, wird zu Schritt 350 zurückverzweigt; falls ja, wird Schritt 370 ausgeführt, wonach die Auflösungssteuerung deaktiviert wird und/oder der Blickrichtungscursor deaktiviert wird und/oder die Anwendungsdatei oder die Anwendung, d.h. Excel, geschlossen wird oder mit einem neuen Arbeitsbereich fortgesetzt wird.

## Patentansprüche

1. Verfahren zum Betreiben einer Anzeigevorrichtung (12), folgende Schritte umfassend:
a) Erfassen von Bilddaten zumindest eines Teils des Kopfes eines Benutzers (14) (110);
b) Ermitteln mindestens eines von dem Benutzer (14) durch Bewegung zumindest eines Teils des Kopfes veränderbaren Parameters aus den in Schritt a) erfassten Bilddaten (120);
c) Steuern einer visuellen Darstellung zum Bedienen einer Anwendung durch den Benutzer auf einer Anzeigevorrichtung (12) in Abhängigkeit des ermittelten mindestens einen Parameters (130);
**gekennzeichnet durch** folgende weiteren Schritte:
d) Ermitteln mindestens eines eine Qualität der Erfassung der Bilddaten betreffenden Qualitätsparameters basierend auf der Erfassung in Schritt a) (140);
e) Variieren zumindest einer Auflösung zumindest eines Teils der visuellen Darstellung in Abhängigkeit des mindestens einen Qualitätsparameters (150), wobei sich die Auflösung auf die Größe der visuellen Darstellung bezieht.

2. Verfahren nach Anspruch 1,
**dadurch gekennzeichnet,**
**dass** die visuelle Darstellung zumindest ein durch Bewegung zumindest eines Teils des Kopfes bewegbares Element umfasst, wobei in Schritt e) die Auflösung einer Bewegungsgeschwindigkeit des zumindest einen bewegbaren Elements in Abhängigkeit des mindestens einen Qualitätsparameters variiert wird.

3. Verfahren nach einem der Ansprüche 1 oder 2,
**dadurch gekennzeichnet,**
**dass** in Schritt e) die Auflösung der gesamten visuellen Darstellung in Abhängigkeit des mindestens einen Qualitätsparameters variiert wird.

4. Verfahren nach Anspruch 1,
**dadurch gekennzeichnet,**
**dass** die visuelle Darstellung zumindest ein statisches und/oder ein dynamisches Element umfasst, wobei in Schritt e) die Auflösung des statischen und/oder des dynamischen Elements in Abhängigkeit des mindestens einen eine Qualität der Erfassung der Bilddaten betreffenden Qualitätsparameters variiert wird.

5. Verfahren nach einem der Ansprüche 3 oder 4,
**dadurch gekennzeichnet,**
**dass** als Teil der visuellen Darstellung die Auflösung mindestens eines Elements aus der folgenden Gruppe variiert wird:
- ein Bereich gemäß einer Lupenfunktion;
- der Inhalt eines vorgebbaren Arbeitsfensters;
- ein Mauszeiger;
- ein Cursor;
- ein Bedienelement einer Anwendung;
- ein Inhaltselement oder ein Bereich der von einer Anwendung dargestellten Daten;
- logische Segmente einer Anwendung, die die visuelle Darstellung erzeugt.

6. Verfahren nach einem der vorhergehenden Ansprüche,
**dadurch gekennzeichnet,**
**dass** zur Ermittlung des mindestens einen eine Qualität der Erfassung der Bilddaten betreffenden Qualitätsparameters mindestens eine Größe aus der folgenden Gruppe ermittelt wird:
- Rauschanteile, Frequenz-, Intensitätsverteilungen im Bild.

7. Verfahren nach Anspruch 6,
**dadurch gekennzeichnet,**
**dass** zur Ermittlung des mindestens einen eine Qualität der Erfassung der Bilddaten betreffenden Qualitätsparameters die in Schritt a) erfassten Bilddaten analysiert werden im Hinblick auf mindestens eine der folgenden Größen:
- Frequenzanteile in vorgebbaren Frequenzbereichen, insbesondere durch örtlich-zeitliche Frequenzanalyse oder Wavelets;
- Kontrastwerte in vorgebbaren Bildbereichen, insbesondere Gradienten, Kanten, Intensitäten, Häufigkeiten/Verteilungen in Bildbereichen; und/oder
- das Vorhandensein mindestens eines vorgebbaren Objekts als Indiz für eine hohe Messqualität.

8. Verfahren nach einem der vorhergehenden Ansprüche,
**dadurch gekennzeichnet,**
**dass** die Auflösung gemäß einer linearen, einer nicht-linearen, einer stetigen und/oder einer nicht-stetigen Kennlinie variiert wird.

9. Verfahren nach einem der vorhergehenden Ansprüche,
**dadurch gekennzeichnet,**
**dass** die Variation der Auflösung durch einen Benutzer (14) ein- und ausgeschaltet werden kann, insbesondere durch einen Tastenbefehl, einen Sprachbefehl oder einen Gestenbefehl.

10. Verfahren nach einem der vorhergehenden Ansprüche,
**dadurch gekennzeichnet,**
**dass** mindestens eine einmal eingestellte Auflösung durch einen Benutzer (14) abhängig oder unabhängig von einer Anwendung, die die visuelle Darstellung erzeugt, gespeichert und wieder abgerufen wird, wobei das Speichern und das Abrufen durch voreingestellte oder vom Benutzer vorgebbare Interaktionen, insbesondere durch Tastenbefehle, Sprachbefehle oder Gestenbefehle erfolgt oder dass ein Kontext mitgespeichert wird und das Abrufen einer gespeicherten Auflösung automatisch bei Eintreten des Kontexts erfolgt.

11. Verfahren nach Anspruch 10,
**dadurch gekennzeichnet,**
**dass** der Kontext aus einem oder mehreren der folgenden Parameter bestimmt wird:
- eine vorgebbare Anwendung;
- eine vorgebbare Datei;
- eine vorgebbare Ansicht einer Anwendung, insbesondere der Toolbars, Fenster, Werkzeuge;
- eine vorgebbare Ansicht einer Datei, insbesondere bezüglich der sichtbaren Daten, der Bearbeitungseinstellungen, des Layouts, der sichtbaren Strukturen;
- ein bestimmte Prozessschritt in einem Ablauf, der durch eine Anwendung angeboten wird.

12. Verfahren nach einem der vorhergehenden Ansprüche,
**dadurch gekennzeichnet,**
**dass** der mindestens eine Qualitätsparameter ermittelt wird:
nach Schritt a), insbesondere mit Schritt b) oder zwischen Schritt b) und Schritt c);
fortlaufend, d.h. nach Schritt a) und weiterhin in vorgebbaren zeitlichen Abständen und/oder in Abhängigkeit mindestens eines vorgebbaren Ereignisses, bevorzugt bei Über- und/oder Unterschreiten mindestens eines vorgebbaren Schwellwerts für Bilddaten, insbesondere des mindestens einen Qualitätsparameters.

13. Verfahren nach einem der vorhergehenden Ansprüche,
**dadurch gekennzeichnet,**
- **dass** die Anpassung der Auflösung nach mindestens einer der folgenden Bedingungen erfolgt:
- fortlaufend, wann immer der Qualitätsparameter einen neuen Wert erhält; wenn der Qualitätsparameter mindestens einen vorgebbaren Schwellwert überschreitet;
- wenn sich der Kontext ändert;
- wenn der Benutzer eine vorgebbare Aktion ausführt, insbesondere eine vorgebbare Taste drückt, eine vorgebbare Geste ausführt und/oder ein vorgebbares akustisches Signal gibt.

14. Verfahren nach einem der vorhergehenden Ansprüche,
**dadurch gekennzeichnet,**
**dass** als der mindestens eine Teil des Kopfes des Benutzers (14) dessen Kopf und/oder ein und/oder zwei Augen des Benutzers (14) bewegt wird/werden.

15. Rechnerprogrammprodukt mit einem Programm für eine Rechnereinrichtung, mit Programmcodeabschnitten zum Ausführen und/oder Veranlassen der Schritte gemäß einem der vorhergehenden Ansprüche, wenn das Programm auf der Rechnereinrichtung ausgeführt wird.

16. System zum Betreiben einer Anzeigevorrichtung (12; 12a, 12b) mit
- einer Erfassungsvorrichtung (15; 15a, 15b, 17) zum Erfassen von Bilddaten zumindest eines Teils des Kopfes eines Benutzers (14);
- mindestens einer Recheneinrichtung (24), die ausgelegt ist, mindestens einen von dem Benutzer (14) durch Bewegung zumindest eines Teils des Kopfes veränderbaren Parameter aus den von der Erfassungsvorrichtung (15; 15a, 15b, 17) erfassten Bilddaten zu ermitteln;
- einer Steuervorrichtung (22) zum Steuern einer visuellen Darstellung auf einer Anzeigevorrichtung (12) in Abhängigkeit des von der Recheneinrichtung ermittelten mindestens einen Parameters zum Bedienen einer Anwendung durch den Benutzer;
**dadurch gekennzeichnet,**
**dass** mindestens eine Recheneinrichtung (24) vorgesehen ist, die ausgebildet ist, basierend auf den von der Erfassungsvorrichtung erfassten Bilddaten mindestens einen eine Qualität der Erfassung der Bilddaten betreffenden Qualitätsparameter zu ermitteln, wobei die Steuervorrichtung (22) weiterhin ausgelegt ist, zumindest eine Auflösung zumindest eines Teils der visuellen Darstellung in Abhängigkeit des mindestens einen Qualitätsparameters zu variieren, wobei sich die Auflösung auf die Größe der visuellen Darstellung bezieht.

## Claims

1. Method for operating a display device (12), comprising the following steps:
a) capturing image data of at least a part of a head of a user (14) (110);
b) determining at least one parameter changeable by the user (14) by moving at least a part of the body from the image data captured in step a) (120);
c) controlling a visual representation on a display device (12) for operating an application by the user depending on the at least one determined parameter (130);
**characterized by** the following additional steps:
d) determining at least one quality parameter relating to a quality of the capture of the image data based on the capturing in step a) (140);
e) varying of at least a resolution of at least a part of the visual representation depending on the at least one quality parameter (150), wherein the resolution refers to the size of the visual representation.

2. Method according to claim 1,
**characterized in that**,
the visual representation comprises at least one element movable by moving at least a part of the head, wherein in step e) the resolution of a movement speed of the at least one movable element is varied depending on the at least one quality parameter.

3. Method according to one of claims 1 or 2,
**characterized in that**,
in step e) the resolution of the entire visual representation is varied depending on the at least one quality parameter.

4. Method according to claim 1,
**characterized in that**,
the visual representation comprises at least one static and/or dynamic element, wherein in step e) the resolution of the static and/or dynamic element is varied depending on the at least one quality parameter relating to a quality of the capture of the image data.

5. Method according to one of claims 3 or 4,
**characterized in that**,
as a part of the visual representation, the resolution of at least one element of the following group is varied:
an area according to a magnifier function;
the content of a settable work window;
a pointer;
a cursor;
a control element of an application;
a content element or an area of the data represented by an application;
logical segments of an application generated by the visual representation.

6. Method according to one of the preceding claims,
**characterized in that**,
to determine the at least one quality parameter relating to a quality of the capture of the image data, at least one quantity from the following group is determined:
noise portions, frequency distributions and intensity distributions in the image.

7. Method according to claim 6,
**characterized in that**,
to determine the at least one quality parameter relating to a quality of the capture of the image data, the image data captured in step a) are analyzed with regard to at least one of the following quantities:
frequency portions in settable frequency ranges, in particular via frequency analysis with regard to location and time or via wavelets;
contrast values in settable image areas, in particular gradients, edges, intensities, and rates/distributions in image areas;
and/or
the presence of at least one settable object as indication for a high quality of measurement.

8. Method according to one of the preceding claims;
**characterized in that**,
the resolution is varied according to a linear, a nonlinear, a continuous and/or a non-continuous characteristic.

9. Method according to one of the preceding claims,
**characterized in that**,
the variation of the resolution can be turned on and off by a user (14), in particular through a key command, a voice command or a gesture command.

10. Method according to one of the preceding claims,
**characterized in that**,
at least one resolution which was set once is stored and retrieved by a user (14) depending on or independent from an application generating the visual representation, wherein the storing and the retrieving is performed through preset or user-settable interactions, in particular through key commands, voice commands or gesture commands or that a context is additionally stored and that the retrieving of a stored resolution happens automatically upon occurrence of the context.

11. Method according to claim 10,
**characterized in that**,
the context is determined from one or more of the following parameters:
a settable application;
a settable file;
a settable view of an application, in particular of the toolbars, windows and tools;
a settable view of a file, in particular with regard to visible data, processing settings, the layout, the visible structures;
a determined process step in a sequence provided by an application.

12. Method according to one of the preceding claims,
**characterized in that**,
the at least one quality parameter is determined:
after step a), in particular in combination with step b) or between step b) and step c);
continuously, i.e. after step a) and further in settable time intervals and/or depending on at least one settable event, preferably upon exceeding or falling below at least one settable threshold for image data, in particular for the at least one quality parameter.

13. Method according to one of the preceding claims,
**characterized in that**,
the adaptation of the resolution is performed according to at least one of the following conditions:
consecutively, every time the quality parameter receives a new value;
if the quality parameter exceeds at least one settable threshold value;
if the context changes;
if the user performs a settable action, in particular if the user presses a settable key, performs a settable gesture and/or provides a settable acoustic signal.

14. Method according to one of the preceding claims,
**characterized in that**,
as the at least one part of the head of the user (14), the head and/or one and/or two eyes of the user (14) is moved/are moved.

15. Computer program product with a program for a computing device with program code sections for performing and/or causing the steps according to one of the preceding claims if the program is executed on the computing device.

16. System for operating a display device (12; 12a, 12b) with
a capturing device (15; 15a, 15b, 17) for capturing image data of at least a part of the head of a user (14);
at least one computing device (24) configured to determine from the image data captured by the capturing device (15; 15a, 15b, 17) at least one parameter changeable by the user (14) by moving at least a part of the head;
a control device (22) for controlling a visual representation of a display device (12) depending on the at least one parameter determined by the computing device (24) for operating an application by the user;
**characterized in that**,
at least one computing device (24) is provided which is configured based on the image data captured by the capturing device to determine at least one quality parameter relating to a quality of the capture of the image data, wherein the control device (22) is further configured to vary at least a resolution of a part of the visual representation depending on the at least one quality parameter, wherein the resolution refers to the size of the visual representation.

## Revendications

1. Procédé de fonctionnement d'un dispositif d'affichage (12), comprenant les étapes suivantes:
a) capturer des données d'image d'au moins une partie de la tête d'un utilisateur (14) (110);
b) déterminer au moins un paramètre pouvant être modifié par l'utilisateur (14) en déplaçant au moins une partie de la tête à partir des données d'image capturées à l'étape a) (120);
c) commander une représentation visuelle sur un dispositif d'affichage (12) pour faire fonctionner une application par l'utilisateur en fonction du au moins un paramètre déterminé (130);
**caractérisé par** les étapes supplémentaires suivantes:
d) déterminer au moins un paramètre de qualité relatif à une qualité de la capture des données d'image sur la base de la capture à l'étape a) (140);
e) varier au moins une résolution d'au moins une partie de la représentation visuelle en fonction d'au moins un paramètre de qualité (150), la résolution se rapportant à la taille de la représentation visuelle.

2. Procédé selon la revendication 1,
**caractérisé en ce que**
la représentation visuelle comprend au moins un élément déplaçable en déplaçant au moins une partie de la tête, dans lequel, à l'étape e), la résolution d'une vitesse de déplacement du au moins un élément mobile est variée en fonction du au moins un paramètre de qualité.

3. Procédé selon l'une des revendications 1 ou 2,
**caractérisé en ce que**
à l'étape e), la résolution de l'ensemble de la représentation visuelle varie en fonction du au moins un paramètre de qualité.

4. Procédé selon la revendication 1,
**caractérisé en ce que**
la représentation visuelle comprend au moins un élément statique et / ou dynamique, la résolution de l'élément statique et / ou dynamique étant variée à l'étape e) en fonction d'au moins un paramètre de qualité relatif à une qualité de la capture des données d'image.

5. Procédé selon l'une des revendications 3 ou 4,
**caractérisé en ce que**
dans le cadre de la représentation visuelle, la résolution d'au moins un élément du groupe suivant est modifiée:
- une zone selon une fonction de loupe;
- le contenu d'une fenêtre de travail pré-paramétrable;
- un pointeur;
- un curseur;
- un élément de contrôle d'une application;
- un élément de contenu ou une zone des données représentées par une application;
- des segments logiques d'une application, qui génèrent la représentation visuelle.

6. Procédé selon l'une des revendications précédentes,
**caractérisé en ce que**
pour déterminer l'au moins un paramètre de qualité relatif à une qualité de capture des données d'image, au moins une grandeur du groupe suivant est déterminée:
- portions de bruit, distributions de fréquence et distributions d'intensité dans l'image.

7. Procédé selon la revendication 6,
**caractérisé en ce que**
pour déterminer l'au moins un paramètre de qualité relatif à une qualité de capture des données d'image, les données d'image capturées à l'étape a) sont analysées compte tenu d'au moins l'une des grandeurs suivantes:
- des portions de fréquence dans des plages de fréquence pré-paramétrables, notamment par analyse de fréquence spatio-temporelle ou par ondelettes;
- des valeurs de contraste dans les zones d'image réglables, notamment les gradients, les contours, les intensités et les périodicités / distributions dans les zones d'image; et /ou
- la présence d'au moins un objet pré-paramétrable comme indication d'une qualité de mesure élevée.

8. Procédé selon l'une des revendications précédentes,
**caractérisé en ce que**
la résolution est variée en fonction d'une caractéristique linéaire, non linéaire, continue et / ou non continue.

9. Procédé selon l'une des revendications précédentes,
**caractérisé en ce que**
la variation de la résolution peut être activée et désactivée par un utilisateur (14), notamment via un raccourci clavier, une commande vocale ou une commande gestuelle.

10. Procédé selon l'une des revendications précédentes,
**caractérisé en ce que**
au moins une résolution qui a été définie une fois est stockée et récupérée par un utilisateur (14) en fonction ou non d'une application générant la représentation visuelle, le stockage et la récupération étant effectués par le biais d'interactions par défaut ou pouvant être pré-paramétrables par l'utilisateur, notamment par des commandes clavier, des commandes vocales ou des commandes de gestuelles ou qu'un contexte est en plus stocké et que la récupération d'une résolution stockée a lieu automatiquement lors de l'occurrence du contexte.

11. Procédé selon la revendication 10,
**caractérisé en ce que**
le contexte est déterminé à partir d'un ou plusieurs des paramètres suivants:
- une application pré-paramétrable;
- un fichier pré-paramétrable;
- une vue pré-paramétrable d'une application, notamment des barres d'outils, des fenêtres et des outils;
- une vue pré-paramétrable d'un fichier, notamment en ce qui concerne les données visibles, les paramètres de traitement, la mise en page, les structures visibles;
- une étape de processus déterminée dans une séquence fournie par une application.

12. Procédé selon l'une des revendications précédentes,
**caractérisé en ce que**
le au moins un paramètre de qualité est déterminé:
après l'étape a), notamment avec l'étape b) ou entre l'étape b) et l'étape c);
de manière continue, c'est-à-dire après l'étape a) et ensuite à des intervalles de temps pré-paramétrables et / ou en fonction d'au moins un événement pouvant être pré-paramétrable, de préférence lorsqu'au moins un seuil pré-paramétrable pour les données d'image est dépassé, en particulier pour le au moins un paramètre de qualité.

13. Procédé selon l'une des revendications précédentes,
**caractérisé en ce que**
- l'adaptation de la résolution est effectuée selon au moins l'une des conditions suivantes:
- de façon continue, chaque fois que le paramètre de qualité reçoit une nouvelle valeur; si le paramètre de qualité dépasse au moins une valeur de seuil pré-paramétrable;
- si le contexte change;
- si l'utilisateur exécute une action pré-paramétrable, notamment s'il appuie sur une touche pré-paramétrable, effectue un geste pré-paramétrable et / ou fournit un signal acoustique pré-paramétrable.

14. Procédé selon l'une des revendications précédentes,
**caractérisé en ce que**
lorsque la au moins une partie de la tête de l'utilisateur (14), la tête et / ou un et / ou deux yeux de l'utilisateur (14) est déplacé / sont déplacés.

15. Produit de programmes informatiques avec un programme pour un dispositif informatique avec des sections de code de programme pour effectuer et / ou provoquer les étapes selon l'une des revendications précédentes si le programme est exécuté sur un dispositif informatique.

16. Système pour faire fonctionner un dispositif d'affichage (12; 12a, 12b) avec
- un dispositif de capture (15; 15a, 15b, 17) pour capturer des données d'image d'au moins une partie de la tête d'un utilisateur (14);
- au moins un dispositif informatique (24) configuré pour déterminer à partir des données d'image capturées par le dispositif de capture (15; 15a, 15b, 17) au moins un paramètre modifiable par l'utilisateur (14) en déplaçant au moins une partie de la tête;
- un dispositif de commande (22) pour commander une représentation visuelle d'un dispositif d'affichage (12) en fonction d'au moins un paramètre déterminé par le dispositif informatique pour faire fonctionner une application par l'utilisateur;
**caractérisé en ce qu'**au moins un dispositif informatique (24) est prévu, qui est formé en fonction des données d'image capturées par le dispositif de capture pour déterminer au moins un paramètre de qualité relatif à une qualité de la capture des données d'image, dans lequel le dispositif de commande (22) est configuré en outre pour faire varier au moins une résolution d'une partie de la représentation visuelle en fonction d'au moins un paramètre de qualité, la résolution se rapportant à la taille de la représentation visuelle.
